(19) Europäisches Patentamt
European Patent Office
Office européen des brevets

(11) EP 4 704 285 A1

(12) EUROPÄISCHE PATENTANMELDUNG

(43) Veröffentlichungstag:
04.03.2026 Patentblatt 2026/10

(21) Anmeldenummer: 24197060.7

(22) Anmeldetag: 28.08.2024

(51) Internationale Patentklassifikation (IPC):
H02J 3/00 (2026.01)        H02J 13/00 (2026.01)
H02J 3/24 (2006.01)

(52) Gemeinsame Patentklassifikation (CPC):
H02J 3/0012; H02J 3/00144; H02J 3/0073;
H02J 13/10; H02J 2103/30

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(71) Anmelder: Siemens Aktiengesellschaft
80333 München (DE)

(72) Erfinder:
• Jurisch, Andreas
16727 Schwante (DE)
• Werben, Stefan
91207 Lauf a.d.P. (DE)

(74) Vertreter: Siemens Patent Attorneys
Postfach 22 16 34
80506 München (DE)

(54) FEHLERORTUNG IN EINEM VERMASCHTEN NETZ

(57) Es wird ein Verfahren zur Fehlerortung in einem vermaschten Netz (100) beschrieben, das Verfahren aufweisend:

i) Bestimmen von zumindest einem Leitungsbaum (110) in dem vermaschten Netz (100);

ii) Identifizieren von zumindest einem Leitungspfad (120, 130) in dem zumindest einen identifizierten Leitungsbaum (110),

wobei der Leitungspfad zumindest einen Fehler-Detektor (150) aufweist; und

iii) Detektieren von einem Fehler-Ereignis in dem identifizierten Leitungspfad (120, 130) mittels des zumindest einen Fehler-Detektors (150), und Orten des Fehler in dem vermaschten Netz (100) basierend auf dem detektierten Fehler-Ereignis.

FIG 1

EP 4 704 285 A1

**Beschreibung**

Technisches Gebiet

Die Erfindung bezieht sich auf ein Verfahren zur Fehlerortung in einem vermaschten Netz, wobei das Verfahren aufweist: Bestimmen von zumindest einem Leitungsbaum in dem vermaschten Netz, Identifizieren von zumindest einem Leitungspfad in dem zumindest einen identifizierten Leitungsbaum, wobei der Leitungspfad zumindest einen Fehler-Detektor aufweist, Detektieren von einem Fehler-Ereignis in dem identifizierten Leitungspfad mittels des zumindest einen Fehler-Detektors, und Orten des Fehlers in dem vermaschten Netz basierend auf dem detektierten Fehler-Ereignis. Die Erfindung betrifft weiterhin eine Vorrichtung zur Datenverarbeitung, eine Energievorrichtung, welche die Vorrichtung zur Datenverarbeitung aufweist, und ein vermaschtes Netz, das die Vorrichtung zur Datenverarbeitung oder die Energievorrichtung aufweist.

Die Erfindung kann sich somit auf das technische Gebiet der Fehlerortung in vermaschten Netzen (insbesondere Energieübertragungsnetze und/oder Verteilnetze) beziehen, insbesondere in Hinblick auf Wanderwellen ausgelöst durch Erdschlüsse bei einer Energieanwendung.

Technischer Hintergrund

Netze wie Hochspannungsnetze oder Mittelspannungsnetze spielen eine wichtige Rolle in der Energieversorgung. Entsprechend ist es daher von Bedeutung, einen zuverlässigen und fehlerfreien Betrieb dieser Netze sicherzustellen. Fehler-Ereignisse wie Fehlströme (insbesondere Erdschlüsse bzw. Kurzschlüsse) müssen daher erfasst und auch geortet werden, um möglichst effizient Abhilfe schaffen zu können. Fehlströme wie Erdschlüsse können beispielsweise Wanderwellen im Netz auslösen, die dann detektiert werden und eine Lokalisierung der Fehlerstelle ermöglichen können.

Wanderwellen-Verfahren werden in Energieübertragungs- und Verteilnetzen eingesetzt, um Erdschlüsse präzise zu orten, indem die Zeitdifferenz zwischen ankommenden Wellenfronten an verschiedenen Messpunkten (Fehler-Detektoren) analysiert wird. Wanderwellen-Fehlerortung ist zwar zuverlässig und genau, erfordert aber auch einen hohen technischen Aufwand für Erfassung der Wanderwellen-Ereignisse, deren Umspannwerk-übergreifende Kommunikation sowie der Rückübertagung der Ortungsergebnisse in die Automatisierung. Aufgrund dieses hohen technischen Aufwandes wird diese Technik der genauen Fehlerortung bisher nur in einigen Hochspannungsnetzen eingesetzt. Eine flächendeckende Anwendung, insbesondere auch in Mittelspannungsnetzen, erscheint derzeit aufgrund des hohen Kostenaufwandes wirtschaftlich nicht sinnvoll.

Zusammenfassung der Erfindung

Es kann ein Bedarf bestehen, einen Fehler, insbesondere einen Fehlstrom, in einem vermaschten Netz (Kosten-/Aufwand-) effizient und zuverlässig zu orten.

Ein Verfahren, eine Vorrichtung zur Datenverarbeitung, eine Energievorrichtung, und ein Netz werden im Folgenden beschrieben.

Gemäß einem ersten Aspekt der Erfindung wird ein (insbesondere Computer-implementiertes) Verfahren zur Fehlerortung in einem vermaschten Netz (insbesondere einem Energieübertragungsnetz und/oder einem Verteilnetz, z.B. einem Hochspannungsnetz oder einem Mittelspannungsnetz) beschrieben, das Verfahren aufweisend:

> i) Bestimmen (Identifizieren, Rückverfolgen, Tracen) von zumindest einem Leitungsbaum (der einen oder mehr Fehler-Detektoren aufweist) (insbesondere einer Mehrzahl von Leitungsbäumen) in dem vermaschten Netz;
> ii) Identifizieren (Rückverfolgen, Back-Tracen, Definieren) von zumindest einem Leitungspfad (insbesondere einer Mehrzahl von Leitungspfaden) in dem zumindest einen bestimmten Leitungsbaum, wobei der Leitungspfad zumindest einen Fehler-Detektor (insbesondere einen Wanderwellen-Detektor, z.B. mit einer vergleichsweise hohen Abtastrate) aufweist (beispielsweise kann ein einseitiger Leitungspfad einen Fehler-Detektor aufweisen, während ein zweiseitiger Leitungspfad z.B. zwei Fehler-Detektoren aufweisen kann); und
> iii) Detektieren (Messen) von einem Fehler-Ereignis (z.B. einer Wanderwelle, ausgelöst von einem Fehlstrom wie einem Erdschluss) in dem identifizierten Leitungspfad mittels des zumindest einen Fehler-Detektors, und insbesondere Orten (Lokalisieren) des Fehlers in dem vermaschten Netz basierend auf dem detektierten Fehler-Ereignis (insbesondere basierend auf einer Mehrzahl von Detektionen des Fehler-Ereignissen in einer Mehrzahl von Leitungspfaden, insbesondere in einer Mehrzahl von Leitungsbäumen).

Gemäß einem zweiten Aspekt der Erfindung wird eine Vorrichtung zur Datenverarbeitung (z.B. ein oder mehr Prozessoren) beschrieben, die eingerichtet ist das Verfahren wie oben beschrieben (zumindest teilweise) auszuführen.

Gemäß einem dritten Aspekt der Erfindung wird eine Energievorrichtung beschrieben, insbesondere aufweisend zumindest ein Schutzgerät, wobei die Energievorrichtung zumindest eine Vorrichtung zur Datenverarbeitung wie oben beschrieben aufweist.

Gemäß einem vierten Aspekt der Erfindung wird ein (vermaschtes) Netz beschrieben, z.B. ein Mittelspannungsnetz, das eine Mehrzahl von Fehler-Detektoren (insbesondere an Knoten-Punkten) aufweist und zumindest eine Vorrichtung zur Datenverarbeitung oder zumindest eine Energievorrichtung wie oben beschrieben.

Im vorliegenden Kontext kann der Begriff "Leitungsbaum" insbesondere eine Struktur von Leitungen in einem vermaschten Netz bezeichnen, die miteinander zumindest teilweise verzweigt sind. Ein Leitungsbaum kann die Verteilung elektrischer Energie durch ein Netz von (Haupt- und Neben-) Leitungen beschreiben, die sich baumartig von einem definierten Punkt aus verzweigen, an dem sich ein Gerät (insbesondere ein Fehler-Detektor) befindet. Ein Leitungsbaum kann ein oder mehr Geräte aufweisen, z.B. besagte Fehler-Detektoren, insbesondere Wanderwellen-Detektoren. Eines dieser Geräte kann als definierter Punkt bzw. Startpunkt angesehen werden. Leitungen eines Leitungsbaums können sich z.B. an T-junctions oder Sammelschienen (als Knotenpunkte) verzweigen. Eine Leitungsstruktur kann auf verschiedene Weise als Leitungsbaum bestimmt werden, so kann z.B. jeder Fehler-Detektor als Startpunkt des Leitungsbaums definiert werden. Die Leitungen eines Leitungsbaums enden gewöhnlich in einem weiteren Fehler-Detektor, jedoch kann ein Leitungsbaum auch z.B. tichleitungen aufweisen. In einem Beispiel kann eine Wanderwelle durch ein Fehler-Ereignis in einem Leitungsbaum entstehen und dann die Leitungen des Leitungsbaums entlanglaufen. An jedem Knotenpunkt kann es zu einer Dämpfung einer solchen Welle kommen.

Im vorliegenden Kontext kann der Begriff "Leitungspfad" insbesondere einen Abschnitt des oben beschriebenen Leitungsbaums bezeichnen, insbesondere zwischen einem Wurzelknoten und einem Endknoten. In einem Beispiel kann ein Leitungspfad zwischen zwei Fehler-Detektoren des Leitungsbaums definiert werden (zweiseitiger Leitungspfad). In einem weiteren Beispiel kann ein Leitungspfad zwischen einem Fehler-Detektor und einem Abschluss (z.B. Transformator) definiert werden. Erfindungsgemäß kann ein Leitungsbaum in ein oder mehr Leitungspfade zerlegt werden. Entlang eines solchen Leitungspfades kann es zu einem Fehler-Ereignis kommen, welches dann an einem der bzw. dem einen Fehler-Detektor detektiert wird. Ein Leitungspfad kann daher in diesem Kontext auch als Fehlerorter bezeichnet werden. Neben der eigentlichen Leitung und den/dem Fehler-Detektor kann ein Leitungspfad weitere Elemente/Geräte aufweisen, z.B. T-junctions, Sammelschienen, Terminals, usw. Diese Elemente/Geräte können als Knoten im Leitungsbaum ausgebildet sein. Leitungen bzw. Leitungspfade können die Kanten des Leitungsbaumes bilden. Terminals können der Verbindung einer Leitung zu einem Knoten zugeordnet sein, wobei jedes Terminal (optional) einem Gerät zugeordnet sein kann.

Im vorliegenden Kontext kann der Begriff "Fehlstrom" insbesondere ein unerwünschtes Strom-Ereignis beschreiben, z.B. einen Erdschluss und/oder einen Kurzschluss.

Gemäß einem exemplarischen Ausführungsbeispiel kann die Erfindung auf der Idee basieren, dass ein Fehler, insbesondere ein Fehlstrom, in einem vermaschten Netz (Kosten-/Aufwand-) effizient und zuverlässig geortet werden kann, wenn in dem bestehenden Netz Leitungsbäume bestimmt werden, in denen dann Leitungspfade identifiziert werden, die jeweils Fehler-Detektoren aufweisen, um ein Fehler-Ereignis zu detektieren und zu orten (basierend auf einer Auswertung der Leitungspfade als Fehlerorter).

Konventionell werden Wanderwellen-Detektoren gezielt in ein Hochspannungsnetz integriert nach dem peer-to-peer oder master-slave Prinzip, also mit direkter Abhängigkeit voneinander. Von Anfang an wird hierfür ein hoher Engineering-Aufwand betrieben. Im Gegensatz hierzu wird erfindungsgemäß die bestehende Topologie eines Netzes betrachtet, um das Netz in verschiedene Leitungsbäume und Leitungspfade zu zerlegen, wobei eine hohe Flexibilität gegeben ist. Das Ergebnis kann dann eine Liste mit bestehenden Leitungspfaden sein, die für eine widerspruchsfreie Ortung verwendet werden können (z.B. dadurch, dass von jedem Knoten des Baumes immer nur eine Verbindung zu einem Elternknoten existiert).

Die beschriebene Vorgehensweise kann einige Vorteile bereitstellen, so z.B.:

i) die Fehlerortung erfordert im Gegensatz zu konventionellen Lösungen nicht an jedem Leitungsterminal einen Fehler-Detektor (z.B. Wanderwellen-Detektor),

ii) der Engineering-Aufwand für Geräte, Kommunikationsstrecken und die Fehlerortung selbst ist sehr gering (bestehende Strukturen werden direkt verwendet),

iii) Erweiterungen sind flexibel (und mit sehr geringem Aufwand) möglich.

Mittels des erfindungsgemäßen Verfahrens kann ein elektrisches Netz mit deutlich weniger Geräten zur Erfassung von Fehler-Ereignissen (z.B. Wanderellenvorgängen) geortet werden (z.B. kann auch auf Spannungswandler verzichtet werden). Weiterhin kann durch das (komplett) automatisierbare Tracing der Netztopologie (Auffinden der Leitungsbäume und Leitungspfade) die eindeutige Ortbarkeit des Netzes mit der gewählten Positionierung von Geräten durch das Verfahren gewährleistet werden.

In einem bevorzugten Ausführungsbeispiel benötigt das Verfahren benötigt keine Nachführung der Schaltzustände von Leitungen, so dass ein besonders effizienter und kostengünstiger betrieb ermöglicht sein kann.

Exemplarische Ausführungsbeispiele

Gemäß einem Ausführungsbeispiel weist der zumindest ein Leitungspfad einen zweiseitigen Leitungspfad auf, der an den Extremitäten (Enden) jeweils einen des zumindest einen Fehler-Detektors aufweist. Dies kann den Vorteil haben, dass eine zuverlässige Fehler-Detektion an dem Leitungspfad ermöglicht ist.

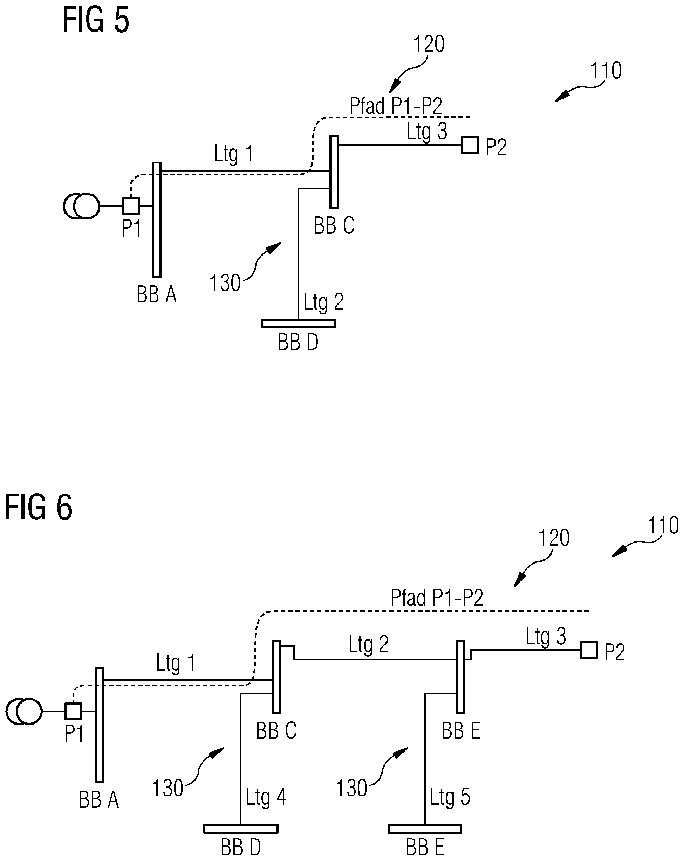

Gemäß einem Ausführungsbeispiel weist der zumindest eine Leitungspfad einen einseitigen Leitungspfad auf, der an (exklusiv) einer Extremität den zumindest einen Fehler-Detektor aufweist. Einige Leitungspfade (z.B. Stichleitungen) weisen nur einen Fehler-Detektor auf (siehe z.B. Figuren 5 und 6, mit ausführlicher Beschreibung eines Beispiels). Tritt aber ein Fehler-Ereignis an einem solchen einseitigen Leitungspfad auf, so kann eine Fehlerortung basierend auf dem einseitigen Leitungspfad zusätzlich oder alternativ (bevorzugt ergänzend) zu der zweiseitigen Fehlerortung durchgeführt werden. Der einseitige Leitungspfad kann z.B. an einen zweiseitigen Leitungspfad gekoppelt sein.

Gemäß einem Ausführungsbeispiel ist der zumindest eine identifizierte Leitungspfad ein eindeutig ortbarer (bzw. widerspruchsfreier) Leitungspfad. Gemäß einem Ausführungsbeispiel weist das Verfahren auf: Prüfen, ob der zumindest eine identifizierte Leitungspfad ein eindeutig ortbarer Leitungspfad ist. Gemäß einem Ausführungsbeispiel weist das Verfahren auf: Bereitstellen (einer Liste) von eindeutig ortbaren Leitungspfaden. Die Zuverlässigkeit kann deutlich erhöht werden, wenn nur eindeutig ortbare Leitungspfade verwendet werden. Gemäß einem Ausführungsbeispiel ist bei einem eindeutig ortbaren Leitungspfad von jedem Knoten nur ein Elternknoten erreichbar. Gemäß einem Ausführungsbeispiel kann im Fall, dass ein Knoten mehrere Elternknoten aufweist, der Einbau von einem zusätzlichen Gerät (Fehler-Detektor) an diesem Knoten erforderlich sein, um die eindeutige Ortbarkeit des/der Leitungspfads/Leitungspfade zu erreichen.

In einem Beispiel ist ein Leitungspfad eindeutig, wenn es nur eine mögliche Verbindung zwischen zwei Fehler-Detektoren im zugehörigen Leitungsbaum gibt. Die Eindeutigkeit aller Leitungspfade im Leitungsbaum ist gegeben, wenn z.B. jeder (Sammelschienen-) Knoten im Leitungsbaum jeweils nur eine Verbindung zu einem Elternknoten im Leitungsbaum hat. Mit diesem einfachen, aber zuverlässigen, Test kann die eindeutige Ortbarkeit aller Leitungspfade im Leitungsbaum überprüfbar sein.

In einem Beispiel entspricht die Gesamtmenge aller in den Leitungsbäumen enthaltenen Leitungen der Menge an Leitungen, auf denen der Fehlerort mit dem Verfahren der zweiseitigen Ortung mit der ersten Wellenfront bestimmt werden kann. Mit Hilfe der Leitungsbäume lassen sich folgende Informationen für die im Netz vorhandenen Fehler-Detektoren ableiten: Menge der im Netz ortbaren Leitungen und Eindeutigkeit der Ortbarkeit.

Gemäß einem Ausführungsbeispiel weist das Verfahren auf: Annehmen, dass die Schaltzustände des vermaschten Netzes geschlossen (bzw. im Schaltzustand "geschlossen") sind. Gemäß einem Ausführungsbeispiel ist das Verfahren frei ist von einem Bestimmen der Schaltzustände in dem vermaschten Netz. Dies kann zu einer deutlichen Vereinfachung führen und Kosten-/Aufwendungen senken. Konventionell setzt eine Berechnung unbekannter Größen aus vorhandenen Messwerten eine genaue Kenntnis der aktuellen Schaltzustände des Netzes voraus. Das erfordert eine ständige Überwachung und Übertragung der Schaltzustände von Leistungsschaltern und Trennern des zu ortenden Netzes an die Leitungspfade und zudem einen hohen Engineering-Aufwand und den flächendeckenden Einsatz von Netzleittechnik im gesamten zu ortenden Netz. Das ist in vielen Mittelspannungsnetzen z.B. nicht gegeben.

In einem Beispiel werden in der Netzkonfiguration alle Schalter als geschlossen angenommen. Werden während des Netzbetriebs die als geschlossen angenommen Schalter geöffnet, können sich über dies Leitungspfade keine Wanderwellen ausbreiten. Da Leitungspfade in einem Beispiel nur geortet werden, wenn (sie ein Zeit-Kriterium erfüllen und) die Differenzzeit der Trigger der Fehler-Detektoren an den Leitungspfad-Enden kleiner als die Laufzeit einer Welle über den gesamten Leitungspfad ist, kann bei einem durch einen Schalter unterbrochenen Leitungspfad keine Ortung aktiviert werden, da eine Wanderwelle die Fehler-Detektoren nur über Umwege erreichen kann, Dadurch kann die Laufzeit über den (nun unterbrochenen) Leitungspfad nicht eingehalten werden.

Gemäß einem Ausführungsbeispiel weist das Detektieren des Fehler-Ereignisses auf: Feststellen, ob das Fehler-Ereignis ein (Lauf-) Zeit- (Differenz-) Kriterium erfüllt. Gemäß einem Ausführungsbeispiel weist das Zeit-Kriterium auf, dass die Differenzzeit zwischen dem Erreichen des Fehler-Ereignisses (z.B. einer Wanderwelle) an den beiden Fehler-Detektoren eines zweiseitigen Leitungspfads kleiner ist die Laufzeit des Fehler-Ereignisses über den (gesamten) zweiseitigen Leitungspfad. Mittels eines solchen Zeit-Kriteriums kann z.B. in einfacher und zuverlässiger Weise überprüft werden, ob ein Fehler-Ereignis an einem zweiseitigen Leitungspfad stattfindet (wenn das Zeit-Kriterium erfüllt ist) oder nicht (wenn das Zeit-Kriterium nicht erfüllt ist). In letzterem Fall kann es vorteilhaft sein zusätzlich oder alternativ einen einseitigen Leitungspfad zu evaluieren, der insbesondere mit dem zweiseitigen Leitungspfad gekoppelt/verbunden ist. Ferner kann, wie oben beschrieben, mittels des Zeit-Kriteriums davon ausgegangen werden, dass alle Schaltzustände geschlossen sind, was zu einer deutlichen Vereinfachung und Kostenreduktion führen kann. Allgemein kann mit dem Zeit-Kriterium sichergestellt werden, dass nur aktive Leitungspfade mit detektiertem Fehler-Ereignis berücksichtigt werden.

Gemäß einem Ausführungsbeispiel weist das Verfahren ferner auf: Orten des Fehlers basierend auf einem einseitigen Leitungspfad, der mit dem zweiseitigen Leitungspfad gekoppelt ist (insbesondere, wenn der ermittelte zweiseitige Fehlerort dem Anschlusspunkt des einseitigen Leitungspfades an den zweiseitigen Leitungspfad entspricht). Dies kann den Vorteil haben, dass eine zuverlässige Ortung auch in dem Fall gegeben ist, dass ein Fehler-Ereignis an einem einseitigen Leitungspfad stattfindet.

Gemäß einem Ausführungsbeispiel weist das Detektieren des Fehler-Ereignisses auf: Detektieren einer Wanderwelle, insbesondere der Laufzeit der Wanderwelle. Gemäß einem Ausführungsbeispiel weist das Orten des Fehlers auf: Orten eines Fehlerstroms, insbesondere eines Erdschlusses/Kurzschlusses. Dadurch können häufige Fehler in Netzen effizient und zuverlässig erkannt (und beseitigt) werden.

Gemäß einem Ausführungsbeispiel weist das Netz ein elektrisches Netz, insbesondere ein Energieübertragungsnetz/Verteilnetz, insbesondere ein Mittelspannungsnetz, auf. Insbesondere in Mittelspannungsnetzen wird eine Ortung von Wanderwellen häufig als unwirtschaftlich angesehen. Dieses Vorurteil kann mit dem beschriebenen Verfahren jedoch überwunden werden, so dass auch eine wirtschaftliche Fehlerortung in Mittelspannungsnetzen ermöglicht ist.

Folgende Nachteile können sich konventionell hinsichtlich Mittelspannungsnetzen ergeben:

i) ein ortbarer Pfad liegt immer nur zwischen zwei Gerätestandorten. Das schränkt die Nutzung gerade in der Mittelspannung ein, da hier die zu ortenden Pfade oft in Ortsnetzstationen enden, in denen keine Infrastruktur für den Einbau von Ortungsgeräten vorhanden ist (kein Anschluss an Kommunikationsnetze, keine Strom- und Spannungswandler, keine Stromversorgung),

ii) zur Berechnung der fehlenden Signale an den Leitungsenden ohne Geräte werden Vierpol-Modelle benutzt. Das bedeutet, dass an allen Einbauorten von Geräten Strom- und Spannungswandler vorhanden sein müssen. In Mittelspannungsnetzten sind jedoch oft nur Stromwandler vorhanden.

Diese Nachteile können erfindungsgemäß jedoch überwunden werden.

Gemäß einem Ausführungsbeispiel weist das Verfahren ferner auf: Bereitstellen der Netz-Topologie. Basierend auf der Netzkonfiguration können dann die Leitungsbäume bestimmt werden.

Gemäß einem Ausführungsbeispiel weist ein Leitungsbaum zumindest eines der folgenden Merkmale auf: der Leitungsbaum geht von einem Fehler-Detektor aus, der Leitungsbaum endet an einem Fehler-Detektor, der Leitungsbaum entspricht zumindest teilweise dem Laufweg einer Wanderwelle (insbesondere entsprechen die Leitungspfade zwischen dem Wurzelknoten und den Endknoten des Leitungsbaums den möglichen Laufwegen einer Wanderwelle). Gemäß einem Ausführungsbeispiel weist das Bestimmen des zumindest einen Leitungsbaums zumindest eines der folgenden auf (insbesondere ausgehend von einem Fehler-Detektor): Identifizieren eines Ringschlusses, Identifizieren einer Dämpfung die über einem Schwellenwert liegt, Identifizieren eines weiteren Fehler-Detektors.

Gemäß einem Ausführungsbeispiel weist das Detektieren des Fehler-Ereignisses auf: Erstellen eines Zeitstempels an dem korrespondierenden Fehler-Detektor. Dadurch kann der Ankunftszeitpunkt der (ersten) Wellenfront präzise erfasst und verglichen werden.

Gemäß einem Ausführungsbeispiel weist das Orten des Fehler-Ereignisses auf: Zuordnen von Leitungspfad-Ereignis Paaren. Dadurch kann übersichtlich dargestellt werden, an welchem Leitungspfad ein Fehler-Ereignis aufgetreten ist/detektiert wurde.

Gemäß einem Ausführungsbeispiel weist das Verfahren auf: im Fall, dass ein zweiseitiger Leitungspfad mit einem einseitigen Leitungspfad gekoppelt ist: Durchführen einer einseitigen Fehlerortung. Beispielsweise kann das Fehler-Ereignis an dem einseitigen Leitungspfad liegen, so dass die zusätzliche Auswertung die Zuverlässigkeit erhöhen kann.

Gemäß einem Ausführungsbeispiel ist zumindest eine Leitung, insbesondere ein Leitungsterminal, des vermachten Netzes frei von einem Fehler-Detektor. Gemäß einem Ausführungsbeispiel sind die Fehler-Detektoren in dem vermaschten Netz bestehende Fehler-Detektoren. Gemäß einem Ausführungsbeispiel bezieht sich das Bestimmen von dem zumindest einen Leitungsbaum auf in dem vermaschten Netz bestehende Fehler-Detektoren. Dadurch können Geräte und somit Kosten/-Aufwendungen eingespart werden.

Gemäß einem Ausführungsbeispiel weist das Orten des Fehler-Ereignisses auf: Detektieren des Fehler-Ereignisses bezüglich einer Mehrzahl von Leitungspfaden. Gemäß einem Ausführungsbeispiel weist das Verfahren auf: Prüfen/Evaluieren/Gewichten der Mehrzahl von Leitungspfaden basierend auf zumindest einem Qualitätskriterium. Gemäß einem Ausführungsbeispiel weist das Qualitätskriterium zumindest eines der folgenden auf: eine Pfadlänge, (Finden des) kürzesten Pfades, Dämpfung über den Pfad (z.B. Vergleichen mit Schwellenwert).

Je kürzer der Leitungspfad, desto größer kann in einem Beispiel die Zuverlässigkeit sein. In einem weiteren Beispiel erlaubt die jedem Endknoten (Leitungspfad) zugeordnete Dämpfung ein Rating der Pfade. Für die Ortung einer Leitung wird in einem Beispiel der Leitungspfad ausgewählt, der die geringste Dämpfung und/oder die kürzeste Leitungs-Gesamtlänge hat.

Gemäß einem Ausführungsbeispiel weist das vermaschte Netz ein Internet of Things (IOT) Netzwerk auf. Insbesondere können die Geräte (wie Fehler-Detektoren) an ein IoT Netzwerk angeschlossen sein. Gemäß einem Ausführungsbeispiel weist das IoT Netzwerk einen IoT Vermittler (Broker) auf, und wobei ein Erweitern/-Verändern des vermaschten Netzes aufweist: Aktualisieren des IoT Vermittlers. Auf diese Weise können neue Geräte bzw. Updates schnell und hocheffizient durchgeführt werden. Der IoT Vermittler können z.B. zusätzliche Geräte direkt und flexibel in die Netz-Topologie eingegeben werden und dann bei dem Bestimmen von Leitungsbäumen bzw. Identifizieren von Leitungspfaden berücksichtigt werden. In einem Beispiel kann die Zuordnung von Geräten, die im IoT-Netzwerk als IoT-Server agieren, zu Leitungsterminals über Namenskonventionen in den IoT-Pfadnamen erfolgen.

Gemäß einem Ausführungsbeispiel wird eine Netztopologie in ortbare Pfade überführt und das Ortungsverfahren benötigt keine Informationen über den aktuellen Schaltzustand des zu ortenden Netzes.

Gemäß einem Ausführungsbeispiel ist zumindest ein Fehler-Detektor (insbesondere alle Fehler-Detektoren) frei von einem Spannungswandler. Gemäß einem Ausführungsbeispiel werden für die Erdschlussortung keine Nullsystemgrößen benötigt. Die Geräte (Fehler-Detektoren) benötigen in einem Beispiel den Anschluss an einen Stromwandler (3 Phasen) und einen Spannungswandler (3 Phasen). Wird auf den Anschluss der Spannungswandler verzichtet, können folgende Einschränkungen in der Erdschlussortung entstehen: eine Bestimmung der Erdschlussrichtung ist nicht möglich. Damit kann bei einem Erdschluss direkt an einem Leitungsabgang nicht genau unterschieden werden, ob sich der Erdschluss auf dem Leitungsabgang, der Sammelschiene oder direkt an einem Nachbarabgang befindet. Zur hochgenauen Ortung können daher Strom- und Spannungssignale benötigt werden.

Gemäß einem exemplarischen Ausführungsbeispiel kann ein Aspekt der Erfindung wie folgt beschrieben werden. Die Leitungsbäume werden aus einer maschinenlesbaren Topologie-Beschreibung des Netzes erstellt (z.B. einem CIM-Modell), indem ausgehend von jeder Position eines Gerätes in der Topologie-Beschreibung ein Leitungsbaum erstellt wird. In diesem Leitungsbaum werden alle Verbindungen in Form von Leitungen als Kanten und alle Verzweigungspunkte des Netzes als Knoten aufgenommen. Dieser Prozess kann z.B. als Topologie-Tracing bezeichnet werden. Das Topologie-Tracing wird abgebrochen, wenn:

i) an dem Ende einer Kante (bzw. Leitung) ein weiteres Gerät (z.B. Fehler-Detektor) detektiert wird. Der Pfad, der sich durch Backtracing zwischen dem Leaf-Knoten mit angeschlossenem Gerät und dem Wurzelknoten des Leitungsbaumes ergibt, wird als zweiseitiger Pfad bezeichnet.
ii) die Dämpfung einer Wanderwelle über den kompletten Pfad zwischen einem Leaf-Knoten und den Wurzelknoten des Leitungsbaumes einen definierten Schwellwert überschreitet.

Sind mindestens zwei Leaf-(End)knoten des so erstellten Leitungsbaumes nicht mit einem Gerät ausgestattet, dann können die Leitungsbäume so verkürzt werden, dass zwischen einem Endknoten ohne Gerät und einem Elternknoten, der entweder Teil eines zweiseitigen Pfades oder der Wurzelknoten ist, keine Verzweigung vorhanden ist.

Gemäß einem exemplarischen Ausführungsbeispiel kann ein Aspekt der Erfindung wie folgt beschrieben werden.

i) die Zuordnung eines Fehler-Ereignisses zu einem zweiseitigen Pfad, bei dem mindestens zwei Fehler-/Wanderwellen-Detektoren ein Ereignis liefern, kann dadurch gelingen, dass die dem Pfad zugeordnete Ausbreitungszeit einer Wanderwelle zwischen den Endknoten des Pfades kleiner oder gleich der Differenzzeit zwischen den Wanderwellen-Ereignissen der den Endknoten des Pfades zugeordneten Geräten ist. Für diesen Pfad wird dann eine bekannte zweiseitige Fehlerortung durchgeführt.
ii) weiterhin kann die Zuordnung eines Fehler-Ereignisses zu einem einseitigen Pfad erfolgen, indem die gemessene Fehlerentfernung für das dem Wurzelknoten des Pfades zugeordneten Gerätes eine Entfernung kleiner oder gleich der Pfadlänge gemessen hat.
iii) weiterhin kann die Zuordnung eines Fehler-Ereignisses zu einem zweiseitigen Pfad mit abzweigendem einseitigem Pfad erfolgen, indem die Geräte, welche den beiden Endknoten des zweiseitigen Pfades zugeordnet sind, eine zweiseitige Fehlerortung durchgeführt haben, und als Fehlerort der Knoten mit dem abzweigenden einseitigen Pfad gemessen wurde. In diesem Fall kann zusätzlich die einseitige Fehlerortung für den am georteten Knoten abzweigenden einseitigen Pfad aktiviert werden.

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

## Kurze Beschreibung der Zeichnungen

Figur 1 zeigt ein Flussdiagramm eines Verfahrens zur Fehlerortung in einem vermaschten Netz, gemäß einem exemplarischen Ausführungsbeispiel der Erfindung.

Figur 2 zeigt einen Leitungsbaum mit vier identifizierten Leitungspfaden, gemäß einem exemplarischen Ausführungsbeispiel der Erfindung.

Figur 3 zeigt einen Leitungsbaum mit einem nicht eindeutig ortbaren Leitungspfad, gemäß einem exemplarischen Ausführungsbeispiel der Erfindung.

Figur 4 zeigt eine Transformation eines nicht eindeutig ortbaren Leitungspfads in einen eindeutig ortbaren Leitungspfad mittels Vorsehens eines weiteren Fehler-Detektors, gemäß einem exemplarischen Ausführungsbeispiel der Erfindung.

Figur 5 zeigt einen einseitigen Leitungspfad, der an einen zweiseitigen Leitungspfad gekoppelt ist, gemäß einem exemplarischen Ausführungsbeispiel der Erfindung.

Figur 6 zeigt mehrere einseitige Leitungspfade, die an einen zweiseitigen Leitungspfad gekoppelt sind, gemäß einem exemplarischen Ausführungsbeispiel der Erfindung.

Figur 7 zeigt schematisch, wie sich eine Wanderwelle von einem Fehler-Ereignis zu den beiden Fehler-Detektoren eines Leitungspfades ausbreitet, gemäß einem exemplarischen Ausführungsbeispiel der Erfindung.

Figur 8 zeigt die Ausbreitung einer Wanderwelle von einem Fehler-Ereignis über mehrere Leitungspfade hinweg, gemäß einem exemplarischen Ausführungsbeispiel der Erfindung.

## Detaillierte Beschreibung der Zeichnungen

Die Darstellung in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

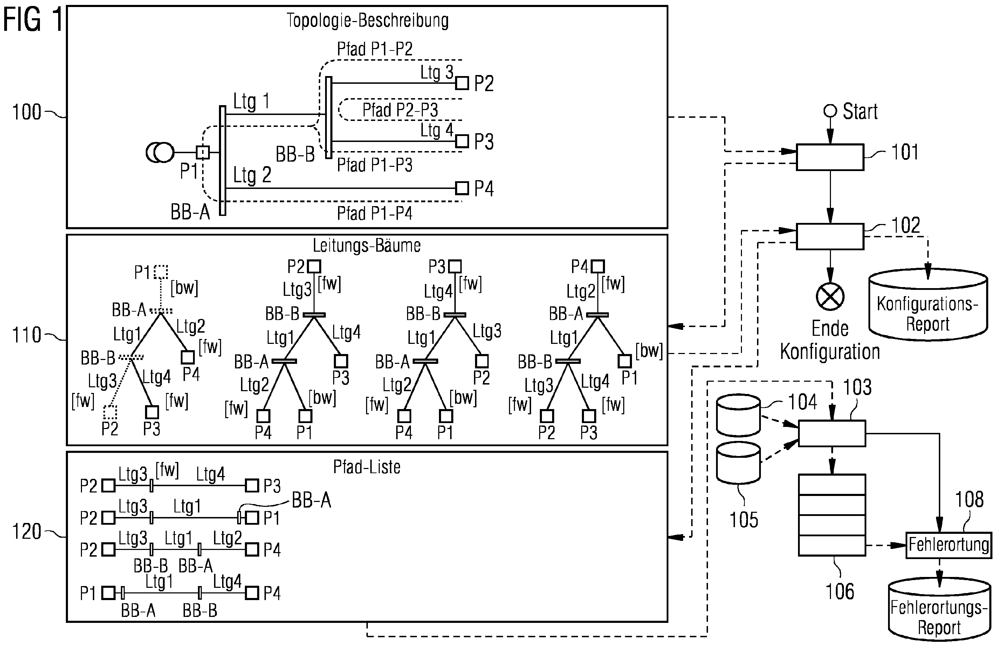

**Figur 1** zeigt ein Flussdiagramm eines Verfahrens zur Fehlerortung in einem vermaschten Netz 100, gemäß einem exemplarischen Ausführungsbeispiel der Erfindung. Zunächst wird eine Topologie (z.B. Schaltplan) des vermaschten Netzes 100 bereitgestellt, welche die Leitungen, Leitungsterminals, Sammelschienen und auch Fehler-Detektoren des vermaschten Netzes 100 enthält. Die Fehler-Detektoren sind hierbei bestehende Detektoren/Sensoren/Messgeräte in dem Netz 100, welche für eine Detektion eines Fehler-Ereignisses eingerichtet sind. Bevorzugt sind die Fehler-Detektoren geeignet Wanderwellen zu detektieren bzw. als Wanderwellen-Detektoren ausgebildet (z.B. hohe Abtastrate). Basierend auf der Netz-Topologie werden Leitungsbäume 110 bestimmt (Schritt 101, tracing) bzw. durch Nachverfolgen gefunden.

In anderen Worten wird die Topologie-Beschreibung des Netzes 100 mittels eines Tracing-Prozesses 101 in Leitungsbäume 110 ausgehend von jedem im Netz 100 vorgesehenen Geräte-Einbauort (Fehler-Detektor) zerlegt. Der Aufbau der Leitungsbäume 110 entspricht dem Laufweg einer sich vom Geräte-Einbauort (Fehler-Detektor) ausbreitenden Wanderwelle. Das Bestimmen der Leitungsbäume 110 wird durch folgende Kriterien abgebrochen:

i) der Laufweg einer sich vom Gerät ausbreitenden Wanderwelle trifft auf einen Abgang, der bereits Bestandteil des Laufweges der Wanderwelle durch den Leitungsbaum war (Ringschluss).

ii) die Dämpfung der sich ausbreitenden Wellenfront der Wanderwelle unterschreitet einen vorgegebenen Schwellwert (Signal wird zu schwach).

iii) der Laufweg der sich ausbreitenden Wellenfront der Wanderwelle trifft auf den Einbauort eines anderen Gerätes bzw. weiteren Fehler-Detektors.

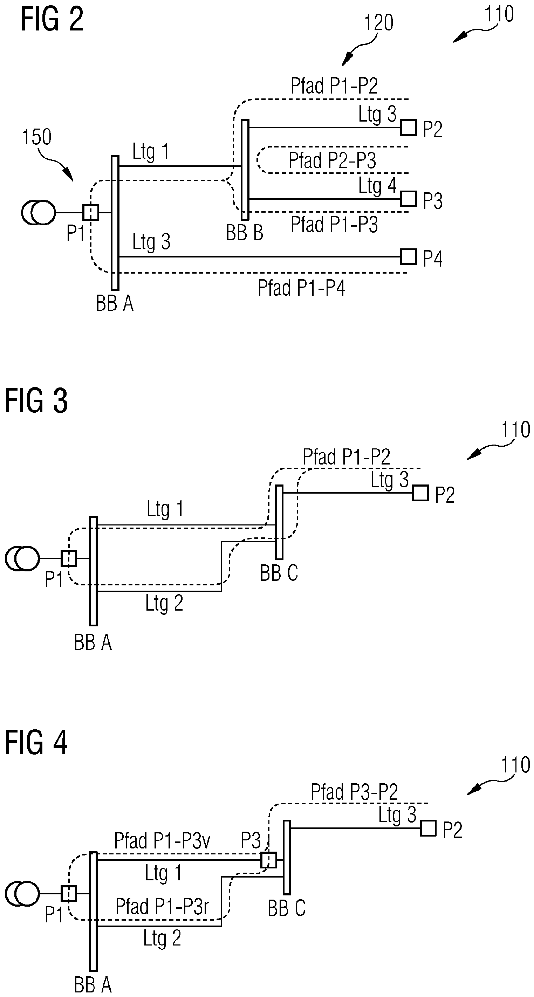

In Figur 1 ist beispielhaft dargestellt, dass, betreffend eine Leitungsstruktur, vier Leitungsbäume 110 bestimmt wurden. Die Leitungsstruktur weist vier Fehler-Detektoren P1-P4 auf und jeder der vier Leitungsbäume 110 startet jeweils von einem der vier Fehler-Detektoren P1-P4 als zentralem Startpunkt vor der Verzweigung. Basierend auf den bestimmten Leitungsbäumen 110 werden nun in jedem Leitungsbaum 110 (eindeutig ortbare) Leitungspfade 120, 130 (Ltg 1 bis Ltg 4) identifiziert (siehe detaillierte Darstellung in Figur 2).

Ausgehend von den Enden der aufgebauten/bestimmten Leitungsbäume 110, an denen sich Fehler-Detektoren befinden, werden durch Rückverfolgung (102, back-tracing) zum Wurzelknoten des Leitungsbaums 110 ortbare Leitungspfade für einen zwei-seitigen Fehlerorter Leitungspfad 120 gebildet. Die in diesen Leitungspfaden 120 enthaltenen Leitungen und Abgänge werden mit einer Eigenschaft "zweiseitig" markiert. Die ortbaren Leitungspfade 120 zwischen den Fehler-Detektoren werden in einer Liste gesammelt.

Ausgehend von den Enden der aufgebauten/bestimmten Leitungsbäume 110, an denen sich keine Fehler-Detektoren befinden, werden durch das Rückverfolgen zum Wurzelknoten des jeweiligen Leitungsbaumes 110 ortbare Leitungspfade 130 für einen einseitigen Fehlerorter Leitungspfad 130 gebildet. Die in diesen Leitungspfaden 130 enthaltenen Leitungen und Abgänge werden mit einer Eigenschaft "einseitig" markiert, wenn sie noch keine Markierung "zweiseitig" besitzen. Trifft der Leitungspfad 130 des einseitigen Fehlerorters auf einen Leitungspfad 120 mit der Eigenschaft "zweiseitig", kann dieser Abgang als Trigger-Fehlerort für die Aktivierung der einseitigen Fehlerortung für diesen Leitungspfad 130 markiert werden. Trifft das Rückverfolgen des einseitigen Fehlerort-Leitungspfades 130 auf einen Knoten, der weitere Kind-Knoten mit als "nicht" oder "einseitig" markierten Knoten hat, wird dieser Leitungspfad 130 für einen einseitige Fehlerortung auf diesen Knoten verkürzt (Verzweigungen in Leitungspfaden des einseitigen Fehlerorters sind in diesem Beispiel nicht zulässig).

Der jeweils eigene Fehler-Detektor P1-P4 bildet den Wurzelknoten eines Leitungsbaumes 110. Leitungen sind die Verbindungen zwischen Knoten. Eine Verbindung zu einem Fehler-Detektor hat eine Bedingung für die Richtung der einlaufenden Welle (z.B. [fw] für vorwärts bzw. [bw] für rückwärts). Existiert nur eine Verbindung zu einem Fehler-Detektor, ist eine Richtungsinformation der einlaufenden Welle für diesen Fehler-Detektor nicht erforderlich (dieses Fehler-Detektor muss dann z.B. nicht über Strom- und Spannungseingänge verfügen). Ein Leitungspfad 120 zwischen zwei Fehler-Detektoren ist dann die Verbindung zwischen den Fehler-Detektoren im Leitungsbaum 110.

Für die gegebene Netz-Topologie liefert das Verfahren somit eine Liste mit ortbaren Leitungspfaden/Leitungen 120, 130. Eine eindeutige Ortbarkeit eines Leitungspfades kann daran erkannt werden, dass bei dem Rückverfolgen von jedem Knoten aus jeweils nur ein Elternknoten erreichbar ist. Ist das nicht der Fall, kann die in dieser Topologie gewählte Geräteplatzierung keine eindeutige Ortbarkeit ermöglichen. Als Ergebnis dieses zweistufigen Identifizierungs-Prozesses entstehen jeweils eine Liste mit Leitungspfaden für einen zweiseitigen Leitungspfad 120 und für einen einseitigen Leitungspfad 130 als Fehlerorter. Diese Schritte können als Konfiguration bezeichnet werden, an deren Ende ein Konfigurationsreport erstellt werden kann.

Wird nun ein Fehler-Ereignis detektiert, z.B. Wanderwellen 104, 105, so werden diese zunächst dem Leitungspfad 120, 130 des jeweiligen Fehler-Detektors zugeordnet, so dass eine Vielzahl an Leitungspfad-Fehler-Ereignis Paaren 106 vorliegen. Diese werden dann auf bekannte Weise ausgewertet, um den Ort des Fehler-Ereignisses präzise orten zu können, so dass z.B. der Ort eines Erdschlusses zuverlässig bestimmt werden kann.

Im besonderen Fall von einseitigen und zweiseitigen Leitungspfaden 120, 130 kann dies z.B. wie folgt ablaufen. Liefern ein oder mehrere Fehler-Detektoren (z.B. Wanderwellen-Recorder) ein Fehler-Ereignis (insbesondere ein Trigger-Ereignis mit einem Trigger-Zeitstempel), werden:

    i) die Trigger-Ereignisse zu zweiseitigen Leitungspfaden 120 zugeordnet, wenn für beide Fehler-Detektoren an den Leitungspfad-Extremitäten/Enden ein Trigger-Ereignis vorliegt und die Differenzzeit zwischen den Trigger-Zeitstempeln kleiner ist als die Laufzeit einer Wanderwelle über den Leitungspfad 120.

    ii) alle anderen Trigger-Ereignisse werden einseitigen Fehlerort-Leitungspfaden 130 zugeordnet.

Liefert die Fehlerortung eines zweiseitigen Leitungspfads 120 die Position eines Trigger-Fehlerortes für die Aktivierung einer einseitigen Fehlerortung, wird zusätzlich der dieser Trigger-Position zugeordnete einseitige Leitungspfad 130 aktiviert.

Als Ergebnis dieses Leitungspfad-Fehler-Ereignis (record-assignment) Prozesses entsteht eine Liste mit zugeordneten Paaren, die als Eingabe für eine einseitige und/oder zweiseitige Wanderwellen-Fehlerortung dient. Aus dieser Liste können nun anhand eines Qualitätskriteriums jene Leitungspfade ausgewählt werden, die besonders geeignet für die Fehlerortung sein können (Gewichtung). Wird bei einer Fehlerortung die Fehlerposition von mehreren ortbaren Leitungspfaden 120, 130 gleichzeitig erfasst, werden die Ortungsergebnisse z.B. nach dem folgenden Kriterium gewichtet: Reziprokwert der Pfadlänge, Reziprokwert der Dämpfung über dem Pfad. Das Ergebnis des Verfahrens (bei 108) ist eine Ortung des Fehlers, z.B. eine Lokalisierung eines Erdschlusses.

**Figur 2** zeigt einen Leitungsbaum 110 mit vier identifizierten Leitungspfaden Ltg 1 bis Ltg 4, gemäß einem exemplarischen Ausführungsbeispiel der Erfindung. Die vier Leitungspfade sind eindeutig zu orten und weisen jeweils ein Gerät (Fehler-Detektor P1 bis P4) am Anfang und Ende (Extremitäten) des jeweiligen Leitungspfades 120 auf und sind somit zweiseitig (zweiseitige Ortung der Wellenfront) vorgesehen.

Zwischen den Fehler-Detektoren P1 und P2 ergibt sich der Leitungspfad P1-P2. Dieser Leitungspfad beinhaltet die Sammelschiene (bus bar) BB-A, die Leitung Ltg1, die Sammelschiene BB-B und die Leitung Ltg3. Dieser Leitungspfad P1-P2 ist eindeutig, da nur ein möglicher Pfad zwischen P1 und P2 existiert. Dieser Leitungspfad hat mit dem Leitungspfad P1-P3 den Abschnitt BB-A, Ltg1 und BB-B gemeinsam (Überlappung).

Ein Fehler auf Ltg1 würde also über die Leitungspfade P1-P2 bzw. P2-P3 geortet werden, während ein Fehler auf Ltg3 über die Leitungspfade P1-P2 bzw. P2-P3 geortet werden kann.

Im diesem Beispiel ergibt sich für den Leitungspfad P1-P2 eine Dämpfung auf jeweils 2/3 an den Sammelschienen BB-A und BB-B. Die Gesamtdämpfung durch die Störstellen an den Sammelschienen über den gesamten Leitungspfad ist dann 1- 2/3*2/3 = 55,55%. Wären an einer der beiden Sammelschienen nicht 3, sondern 5 Leitungen angeschlossen, dann würde sich bereits eine Gesamtdämpfung von 1-2/3*2/5= 73,33% ergeben. Die Dämpfung kann als Qualitätskriterium bei der Auswahl der Leitungspfade verwendet werden.

**Figur 3** zeigt einen Leitungsbaum 110 mit einem nicht eindeutig ortbaren Leitungspfad (gestrichelte Linien), gemäß einem exemplarischen Ausführungsbeispiel der Erfindung. Der Leitungspfad P1-P2 in diesem Netz kann entweder über die Leitung Ltg1 oder Ltg3 geschlossen werden. Damit ist eine eindeutige Fehlerortung zwischen den Fehler-Detektoren P1 und P2 nicht möglich.

**Figur 4** zeigt eine Transformation eines nicht eindeutig ortbaren Leitungspfads in einen eindeutig ortbaren Leitungspfad mittels Vorsehens eines weiteren Fehler-Detektors, gemäß einem exemplarischen Ausführungsbeispiel der Erfindung. Wenn man nun an der Sammelschiene BB-C an einem der Abgänge von Ltg1 oder Ltg2 einen weiteren Fehler-Detektor P3 einfügt, entstehen wieder eindeutige Leitungspfade P1-P3, P3-P2, P1-P3 (wenn das zusätzliche Gerät über Strom- und Spannungseingänge verfügt).

Die Leitungspfade P1-P3v und P1-P3r können über die Richtung der vom Fehler-Detektor P3 detektierten ersten Wellenfront unterschieden werden:

> i) wird die erste Wellenfront an P3 aus Richtung Leitung Ltg1 detektiert, kann von P3 aus der Leitungspfad P1-P3v geortet werden.
> ii) wird die erste Wellenfront an P3 aus Richtung Sammelschiene BB C detektiert, können von P3 aus die Leitungspfade P3-P2 und P1-P3r geortet werden.

Im gezeigten Beispiel ist der Fehler-Detektor P3 also mit Strom- und Spannungseingängen ausgestattet, um eindeutige Leitungspfade zwischen den Fehler-Detektoren zu ermöglichen. Tritt in dem dargestellten Netz ein Fehler auf, werden aufgrund der Ausbreitung der Wanderwelle im gesamten Netz alle Fehler-Detektoren P1, P2 und P3 eine Wellenfront erkennen.

Die tatsächlich vom Fehler betroffene Leitung wird nun über die Zeitdifferenz (Zeit-Kriterium) der erkannten Wellenfronten zwischen den Enden des jeweiligen Leitungspfades bestimmt. Liegt der Fehler auf dem Leitungspfad, dann muss die Zeitdifferenz der zwischen den an den leitungspfad-Enden erkannten Wellenfronten kleiner oder maximal gleich der Laufzeit einer Welle über den gesamten Leitungspfad sein. Liegt der Fehler auf dem Leitungspfad, dann muss die Wellenfront von den beiden Fehler-Detektoren an den Leitungspfad-Enden aus Richtung des Leitungspfades erkannt werden.

Liegt der Fehler außerhalb des Leitungspfades, dann ist die Zeitdifferenz der erkannten Wellenfronten gleich der Laufzeit einer Welle über den gesamten Leitungspfad. Ob ein Fehler genau an einem Leitungspfad-Ende oder außerhalb des Leitungspfades liegt, kann also nur mithilfe der Richtungserkennung der Wellenfront an den beiden Leitungspfadenden unterschieden werden. Deshalb kann es vorteilhaft sein, alle Fehler-Detektoren mit Strom- und Spannungseingängen auszurüsten.

**Figur 5** zeigt einen einseitigen Leitungspfad 130, der an einen zweiseitigen Leitungspfad 120 gekoppelt ist, gemäß einem exemplarischen Ausführungsbeispiel der Erfindung. Befindet sich ein Fehler auf Leitung Ltg2, wird sich die Wellenfront vom Fehler aus Richtung BB-D und BB-C ausbreiten. Erreicht die Wellenfront die Sammelschiene BB-C, dann wird ein Teil zurück in Ltg2 reflektiert, während der andere Teil sich über Ltg1 und Ltg3 fortpflanzt. Die Zeitdifferenz der an den Fehler-Detektoren P1 und P2 erkannten Wellenfronten führt für den zweiseitigen Fehlerorter für den Leitungspfad P1-P2 zu einer Fehlerposition an BB-C. Ein an dieser Stelle erkannter Fehlerort sollte mit zusätzlichen Kriterien verifiziert werden, um die tatsächliche Fehlerposition zu finden.

Dies kann z.B. wie folgt umgesetzt werden:

> i) ein zusätzlicher Fehler-Detektor P3 am Terminal von Ltg2 an BB-D: wird auf den Leitungspfaden P1-P3 und P2-P3 der Fehler auf Ltg2 detektiert, dann ist der Fehlerort BB-C für den Leitungspfad P1-P2 ein scheinbarer Fehlerort und wird verworfen.
> ii) zusätzliches Kriterium einseitige Fehlerortung: wird mit dem einseitigen Fehlerorter 130 ausgehend von P1 eine größere Fehlerentfernung als die Leitungslänge von Ltg1 bestimmt und ausgehend von P2 eine größere Fehlerentfernung als die Leitungslänge von Ltg3 bestimmt, dann muss der Fehler auf Ltg2 liegen. Der Fehlerort BB-C für den Pfad P1-P2 wird verworfen. In beiden Fällen kann ein Fehlerort, der auch mit den Zusatzkriterien an BB-C bestimmt wird, nicht eindeutig einem Terminal an BB-C oder der Sammelschiene selbst zugeordnet werden. Wird diese Eindeutigkeit gefordert, dann müssen an BB-C ebenfalls Fehler-Detektoren nachgerüstet werden.

Eine einseitige Fehlerortung ist dann möglich, wenn sich auf einer Seite einer Leitung ein Fehler-Detektor befindet. Befindet sich eine einseitig ortbare Leitung auf einem Leitungspfad zwischen zwei Fehler-Detektoren, dann ist der Anwendung des zweiseitigen Fehlerorters 120 mit der ersten Wellenfront der Vorzug zu geben. Der zweiseitige Fehlerorter 120 ermöglicht dann genauere Ergebnisse. Deshalb kann der einseitige Fehlerorter 130 als Ergänzung zum zweiseitigen Fehlerorter 120 gesehen werden.

Eine Anwendung des einseitigen Fehlerorters 130 kann z.B. ist in folgenden Szenarien sinnvoll sein: der zweiseitige Fehlerorter hat eine Fehlerposition in der Nähe eines Leitungspfad-Endes bestimmt: aufgrund der kurzen absoluten Distanz zwischen Fehlerort und dem näheren Leitungspfad-Ende ermöglicht der einseitige Fehlerorter 130 hier eine genauere Fehlerposition als der zweiseitige Fehlerorter 120.

**Figur 6** zeigt mehrere einseitige Leitungspfade Ltg 4, Ltg 5, die an einen zweiseitigen Leitungspfad P1-P2 gekoppelt sind, gemäß einem exemplarischen Ausführungsbeispiel der Erfindung. Der offene (bzw. geschlossene; hier nur der offene Ring dargestellt) Ring gestattet über den Leitungspfad P1-P2 die Ortung der Leitungen Ltg1, Ltg2 und Ltg3 mittels des zweiseitigen Fehlerorters 120 für die erste Wellenfront. Wird eine Fehlerposition an einer auf dem Leitungspfad liegenden Sammelschiene festgestellt, dann befindet sich der Fehler entweder an dieser Sammelschiene oder auf der von dieser Sammelschiene abgehenden Stichleitung. Der einseitige Fehlerorter 130 wird dann zur Positionsbestimmung auf dieser Stichleitung eingesetzt.

Weiterhin kann der einseitige Fehlerorter 130 eingesetzt werden, wenn sich an den Abgängen einer Sammelschiene bereits Fehler-Detektoren mit Erdschlusswischerfunktion befinden. Der betroffene Abgang wird mit der Erdschlusswischerfunktion bestimmt, während die Fehlerentfernung mit dem einseitigen Fehlerorter 130 bestimmt wird. Der Fehler-Detektor für die Wanderwellenerfassung befindet sich dann in der Einspeisung auf die Sammelschiene.

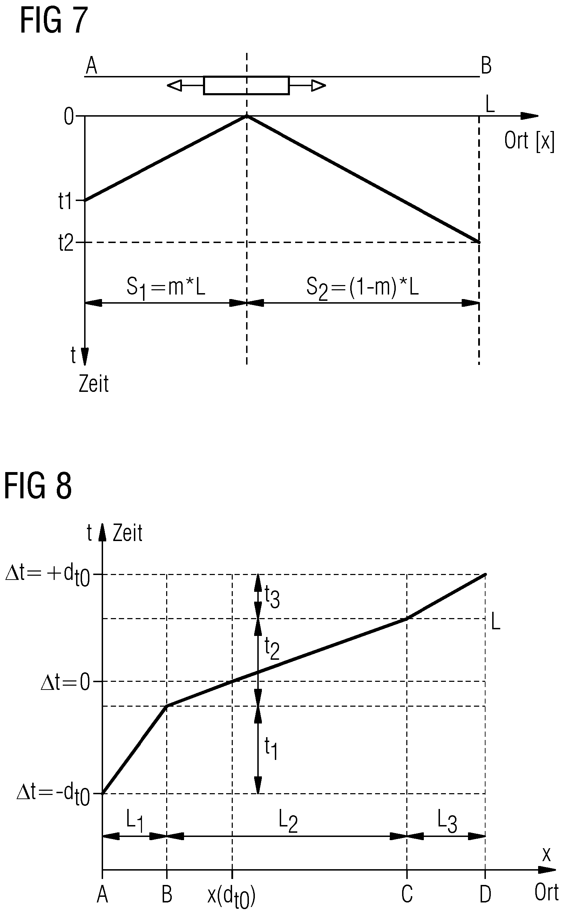

**Figur 7** zeigt schematisch ein Modell, wie sich eine Wanderwelle von einem Fehler-Ereignis zu den beiden Fehler-Detektoren eines Leitungspfades ausbreitet, gemäß einem exemplarischen Ausführungsbeispiel der Erfindung. Die Y-Achse zeigt die Zeit nach dem Fehler-Ereignis und die X-Achse zeigt den Weg (Distanz) der Wanderwelle. Die Wanderwelle breitet sich auf der Leitung mit der Geschwindigkeit v von der Fehlerstelle bei t=0 hin zu den Leitungsterminals aus und erreicht die Seite A bei t=t1 und B bei t=t2.

Die Zeit Δt=t1-t2 kann gemessen werden mittels der Fehler-Detektoren. Die Ausbreitungsgeschwindigkeit der Welle v=s/t wird als bekannt angenommen. Weiterhin ist die Gesamtlänge L der Leitung bekannt. Die Fehlerposition wird mit einem Faktor m ε [0;1] beschrieben. Damit ergibt sich folgende Gleichung für die gemessene Zeitdifferenz:

$$\Delta t = s1/v - s2/v = (m \cdot L)/v - ((1-m) \cdot L)/v$$

Umstellen nach m liefert die anteilige Leitungslänge von der Position A aus bis zur Fehlerposition als per-unit Wert:

$$m = (\Delta t \cdot v + L) \,/\, 2L$$

Die gemessene Zeitdifferenz ist bei genau 50% Fehlerentfernung 0. Liegt der Fehler näher am Terminal A, wird die gemessene Zeitdifferenz negativ (bzw. positiv bei Fehlerentfernungen > 50%). Diese Art der Distanzbestimmung kann für ein einzelnes Segment bzw. eine einzelne Leitung verwendet werden.

**Figur 8** zeigt die Ausbreitung einer Wanderwelle von einem Fehler-Ereignis über mehrere Leitungspfade hinweg, gemäß einem exemplarischen Ausführungsbeispiel der Erfindung (Zusammenhang von Fehlerentfernung und gemessener Differenzzeit am Beispiel eines aus zwei Leitungen und einem Kabel bestehenden Leitungspfades). Für die Strecke A-B wird hier ca. die halbe Ausbreitungsgeschwindigkeit gegenüber den anderen beiden Strecken angenommen (Kabelstrecke). Die anderen beiden Strecken (Freileitungen B-C und C-D) haben nur geringfügige Unterschiede in der Ausbreitungsgeschwindigkeit. Die Fehlerposition x(dt0) auf dem Leitungspfad, für die die Wellenfronten an beiden Enden des Pfades gleichzeitig eintreffen, befindet sich an dem Ort der halben Gesamtlaufzeit einer Welle dt0 über dem kompletten Pfad. Die halbe Gesamtlaufzeit dt0 kann nun mit folgender Formel berechnet werden:

$$d_{t0} = \frac{1}{2} \cdot \sum_{i=1}^{N} t_i = \frac{1}{2} \cdot \sum_{i=1}^{N} \frac{L_i}{v_i}$$

mit $N$: Anzahl der Leitungen im Pfad; $t_i$: Laufzeit einer Welle über die Leitung an Position i im Pfad (von A aus gesehen); $L_i$: Länge der Leitung an Position i im Pfad (von A aus gesehen); $v_i$: Ausbreitungsgeschwindigkeit einer Welle auf der Leitung an Position i im Pfad (von A aus gesehen).

Aus der gemessenen Differenzzeit $Dt$ kann nun die vom Fehler betroffene Leitung im Pfad ermittelt werden:

i) ist $Dt$ negativ, und im Betrag größer als die Laufzeit über der ersten betrachteten Leitung $t_{first}$ im Leitungspfad, kann die Laufzeit der ersten Leitung zu $Dt$ addiert und die erste Leitung aus der Betrachtung ausgeschlossen werden:

$$\Delta t + t_{first}; first = first + 1 \begin{cases} \Delta t < 0 \\ |\Delta t| > t_{first} \\ first \leq N \end{cases}$$

ii) ist $Dt$ positiv, und im Betrag größer als die Laufzeit über der letzten betrachteten Leitung $t_{last}$ im Leitungspfad, kann die Laufzeit der letzten Leitung von $Dt$ subtrahiert und die letzte Leitung aus der Betrachtung ausgeschlossen werden:

$$\Delta t + t_{last}; last = last + 1 \begin{cases} \Delta t > 0 \\ |\Delta t| > t_{last} \\ last \geq 1 \end{cases}$$

Dieser Vorgang startet mit dem gesamten Leitungspfad (*first=1; last=N*) und wird rekursiv so lange wiederholt, bis nur noch eine Leitung in der Betrachtung ist (*first=last*).

Für diese Leitung wir die Fehlerposition mit der weiter oben bereits beschriebenen Formel wie folgt bestimmt:

$$m_x = \frac{\Delta t_x \cdot v_x + L_x}{2 L_x}$$

mit x: Position der fehlerhaften Leitung im Pfad (*x=first=last*); *Dt_x*: Ergebnis der Iteration von *Dt* über den Leitungspfad.

Es sei darauf hingewiesen, dass der Begriff "aufweisend" andere Elemente oder Schritte nicht ausschließt und die Verwendung des Artikels "ein" eine Vielzahl nicht ausschließt. Auch Elemente, die in Verbindung mit verschiedenen Ausführungsformen beschrieben werden, können kombiniert werden. Es ist auch darauf hinzuweisen, dass Bezugszeichen in den Ansprüchen nicht so ausgelegt werden sollten, dass sie den Umfang der Ansprüche einschränken.

Unabhängig vom grammatikalischen Geschlecht eines bestimmten Begriffs sind Personen männlicher, weiblicher oder anderer Geschlechteridentität mit umfasst.

**Patentansprüche**

1. Ein Verfahren zur Fehlerortung in einem vermaschten Netz (100), das Verfahren aufweisend:

   Bestimmen von zumindest einem Leitungsbaum (110) in dem vermaschten Netz (100), insbesondere basierend auf einer Netz-Topologie;
   Identifizieren von zumindest einem Leitungspfad (120, 130) in dem zumindest einen bestimmten Leitungsbaum (110),

   wobei der Leitungspfad (120, 130) zumindest einen Fehler-Detektor (150) aufweist;
   Detektieren eines Fehler-Ereignisses bezüglich dem zumindest einen identifizierten Leitungspfad (120, 130) mittels des zumindest einen Fehler-Detektors (150), und Orten des Fehlers in dem vermaschten Netz (100) basierend auf dem detektierten Fehler-Ereignis.

2. Das Verfahren gemäß Anspruch 1, wobei der zumindest eine Leitungspfad (120, 130) einen zweiseitigen Leitungspfad (120) aufweist, der an den Extremitäten jeweils einen des zumindest einen Fehler-Detektors (P1, P2) aufweist.

3. Das Verfahren gemäß Anspruch 1 oder 2, wobei der zumindest eine Leitungspfad (120, 130) einen einseitigen Leitungspfad (130) aufweist, der an exklusiv einer Extremität den zumindest einen Fehler-Detektor (150) aufweist.

4. Das Verfahren gemäß einem der vorhergehenden Ansprüche,

   wobei der zumindest eine identifizierte Leitungspfad (120, 130) ein eindeutig ortbarer Leitungspfad ist,
   insbesondere wobei das Verfahren aufweist: Prüfen, ob der zumindest eine identifizierte Leitungspfad (120, 130) ein eindeutig ortbarer Leitungspfad ist,
   weiter insbesondere wobei das Verfahren aufweist:
   Bereitstellen einer Liste eindeutig ortbarer Leitungspfade (120, 130).

5. Das Verfahren gemäß einem der vorhergehenden Ansprüche,

   wobei das Verfahren aufweist: Annehmen, dass die Schaltzustände des vermaschten Netzes (100) geschlossen sind; und/oder
   wobei das Verfahren frei ist von einem Bestimmen der Schaltzustände des vermaschten Netzes (100).

6. Das Verfahren gemäß einem der vorhergehenden Ansprüche, wobei das Detektieren des Fehler-Ereignisses aufweist:
   Feststellen, ob das Fehler-Ereignis ein Zeit-Kriterium erfüllt,
   insbesondere wobei das Zeit-Kriterium aufweist, dass die Differenzzeit zwischen dem Erreichen des Fehler-Ereignisses an den beiden Fehler-Detektoren (P1, P2) eines zweiseitigen Leitungspfads (120) kleiner oder gleich ist wie die Laufzeit des Fehler-Ereignisses über den zweiseitigen Leitungspfad (120).

7. Das Verfahren gemäß Anspruch 6, ferner aufweisend:
   Orten des Fehlers basierend auf einem einseitigen Leitungspfad (130), der mit dem zweiseitigen Leitungspfad (120) gekoppelt ist.

8. Das Verfahren gemäß einem der vorhergehenden Ansprüche,

   wobei das Detektieren des Fehler-Ereignisses aufweist: Detektieren einer Wanderwelle, insbesondere der Laufzeit der Wanderwelle; und/oder

wobei das Orten des Fehlers aufweist: Orten eines Fehlerstroms, insbesondere eines Erdschlusses und/oder Kurzschlusses.

**9.** Das Verfahren gemäß einem der vorhergehenden Ansprüche,
wobei das Netz ein Energieübertragungsnetz und/oder ein Verteilnetz, insbesondere ein Mittelspannungsnetz, aufweist.

**10.** Das Verfahren gemäß einem der vorhergehenden Ansprüche, aufweisend zumindest eines der folgenden Merkmale:

wobei das Verfahren ferner aufweist: Bereitstellen der Netz-Topologie;
wobei ein Leitungsbaum (110) zumindest eines der folgenden Merkmale aufweist: der Leitungsbaum (110) geht von einem Fehler-Detektor (150) aus, der Leitungsbaum (110) endet an einem Fehler-Detektor (150), der Leitungsbaum (110) entspricht dem Laufweg einer Wanderwelle;
wobei das Bestimmen des zumindest einen Leitungsbaums (110) zumindest eines der folgenden aufweist, insbesondere ausgehend von einem Fehler-Detektor (150): Identifizieren eines Ringschlusses, Identifizieren einer Dämpfung die über einem Schwellenwert liegt, Identifizieren eines weiteren Fehler-Detektors;
wobei das Detektieren des Fehler-Ereignisses aufweist: Erstellen eines Zeitstempels an dem korrespondierenden Fehler-Detektor (150);
wobei das Orten des Fehler-Ereignisses aufweist: Zuordnen von Leitungspfad-Ereignis Paaren (106);
wobei das Verfahren aufweist: im Fall, dass ein zweiseitiger Leitungspfad (120) mit einem einseitigen Leitungspfad (130) gekoppelt ist: Durchführen einer einseitigen Fehlerortung;
wobei ein eindeutig ortbarer Leitungspfad (120, 130) aufweist: von jedem Knoten ist nur ein Elternknoten erreichbar;
wobei im Fall, dass ein Knoten mehrere Elternknoten aufweist, der Einbau von einem zusätzlichen Fehler-Detektor an diesem Knoten die eindeutige Ortbarkeit des Leitungspfad (120, 130) ermöglicht;
wobei zumindest eine Leitung, insbesondere ein Leitungsterminal, des vermachten Netzes (100) frei von einem Fehler-Detektor (150) ist;
wobei die Fehler-Detektoren (150) in dem vermaschten Netz (100) bestehende Fehler-Detektoren (150) sind;
wobei sich das Bestimmen von dem zumindest einen Leitungsbaum (110) auf in dem vermaschten Netz (100) bestehende Fehler-Detektoren (150) bezieht.

**11.** Das Verfahren gemäß einem der vorhergehenden Ansprüche,

wobei das Orten des Fehler-Ereignisses aufweist:

Detektieren des Fehler-Ereignisses bezüglich einer Mehrzahl von Leitungspfaden (120, 130); und
Gewichten der Mehrzahl von Leitungspfaden (120, 130) basierend auf zumindest einem Qualitätskriterium,

insbesondere wobei das Qualitätskriterium zumindest eines der folgenden aufweist: Pfadlänge, Pfad-Dämpfung.

**12.** Das Verfahren gemäß einem der vorhergehenden Ansprüche,
wobei das vermaschte Netz (100) ein Internet of Things, IOT, Netzwerk aufweist, wobei das IoT Netzwerk einen IoT Vermittler aufweist, und wobei ein Erweitern/Verändern des vermaschten Netzes (100) aufweist:
Aktualisieren des IoT Vermittlers.

**13.** Eine Vorrichtung zur Datenverarbeitung, die eingerichtet ist das Verfahren nach einem der vorhergehenden Ansprüche 1 bis 12 auszuführen.

**14.** Eine Energievorrichtung, insbesondere aufweisend ein Schutzgerät, die zumindest eine Vorrichtung zur Datenverarbeitung gemäß Anspruch 13 aufweist.

**15.** Ein vermaschtes Netz (100), insbesondere ein Mittelspannungsnetz, das aufweist:

eine Mehrzahl von Fehler-Detektoren (P1, P2), insbesondere an Knoten-Punkten; und
zumindest eine Vorrichtung zur Datenverarbeitung gemäß Anspruch 13 oder zumindest eine Energievorrichtung gemäß Anspruch 14.

FIG 1

EP 4 704 285 A1

## FIG 2

## FIG 3

## FIG 4

## FIG 5

## FIG 6

## FIG 7

$$S_1 = m \cdot L \qquad S_2 = (1-m) \cdot L$$

## FIG 8

Europäisches
Patentamt

European
Patent Office

Office européen
des brevets

## EUROPÄISCHER RECHERCHENBERICHT

Nummer der Anmeldung

EP 24 19 7060

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 955 012 A1 (SIEMENS AG [DE]) 16. Februar 2022 (2022-02-16) | 1-11, 13-15 | INV. H02J3/00 |
| Y | * Absatz [0053]; Abbildung 2 * | 12 | H02J13/00 |
| | * Absätze [0069], [0073], [0077], [0082]; Abbildungen 6,5 * | | H02J3/24 |
| | * Absatz [0105] * | | |
| | * Absätze [0067], [0055], [0054], [0070] * | | |
| | * Absätze [0099], [0095] * | | |
| | ----- | | |
| Y | CN 112 198 395 A (LUOYANG POWER SUPPLY CO OF STATE GRID HENAN ELECTRIC POWER CO ET AL.) 8. Januar 2021 (2021-01-08) * Absatz [0051] - Absatz [0059] * ----- | 12 | |

RECHERCHIERTE
SACHGEBIETE (IPC)

H02J

Der vorliegende Recherchenbericht wurde für alle Patentansprüche erstellt

| Recherchenort | Abschlußdatum der Recherche | Prüfer |
|---|---|---|
| München | 2. Februar 2025 | Maucher, Bastian |

**ANHANG ZUM EUROPÄISCHEN RECHERCHENBERICHT**
**ÜBER DIE EUROPÄISCHE PATENTANMELDUNG NR.**                    EP 24 19 7060

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-02-2025

| Im Recherchenbericht angeführtes Patentdokument | Datum der Veröffentlichung | Mitglied(er) der Patentfamilie | Datum der Veröffentlichung |
|---|---|---|---|
| EP 3955012 A1 | 16-02-2022 | BR 102021015836 A2 | 22-02-2022 |
| | | EP 3955012 A1 | 16-02-2022 |
| | | US 2022050134 A1 | 17-02-2022 |
| CN 112198395 A | 08-01-2021 | KEINE | |

Für nähere Einzelheiten zu diesem Anhang : siehe Amtsblatt des Europäischen Patentamts, Nr.12/82

EPO FORM P0461